# EUROPÄISCHE PATENTANMELDUNG

(11) **EP 0 768 784 A2**
(43) Veröffentlichungstag der Anmeldung: **16.04.1997**
(21) Anmeldenummer: 96116169.2
(22) Anmeldetag: 09.10.1996
(51) Int. Cl.: H04M 1/00, H04M 1/72

(54) **Schaltungsanordnung zur Anzeige von vermittlungszustandsbezeichnenden Informationen**

(30) Priorität: 09.10.1995 DE 29516018 U
(71) Anmelder: SIEMENS AKTIENGESELLSCHAFT, 80333 München (DE)
(72) Erfinder: Cristal, Philip, 85646 Anzing (DE)

(57) **Zusammenfassung**

Hierbei werden mittels eines Steuerwerks einer optischen Anzeigeeinrichtung in einem ersten Vermittlungszustand eine Mehrzahl unterschiedlicher erster Informationen in zeitlicher Abfolge zugeführt.

## Beschreibung

Die Erfindung betrifft eine Schaltungsanordnung zur Anzeige von vermittlungszustandsbezeichnenden Informationen nach dem Oberbegriff des Anspruchs 1.

Es sind Fernmeldegeräte mit optischen Anzeigeeinrichtungen bekannt, die dem jeweiligen Vermittlungszustand bezeichnen. Beispielsweise bilden bekannte Fernmeldeendgeräte aus alphanumerischen Zeichen bestehende Anzeigen wie "Konferenz", "Automat. Wahlwiederholung", etc. oder auch Symbole (Piktogramme). Dabei ist für jeden Vermittlungszustand lediglich eine bestimmte Anzeige vorgesehen. Der Benutzer eines derartigen Fernmeldeendgeräts erhält beispielsweise jedoch keine Information über den Fortgang eines Verbindungsaufbaus oder eines Verbindungsabbaus. Bei Mobiltelefonen nimmt der Verbindungsaufbau (Registration) in der Regel eine relativ lange Zeit in Anspruch. Ohne eine Anzeige am Mobilfunktelefon, die den Verbindungsaufbau bezeichnet, oder die nur auf die Tatsache des Verbindungsaufbaus hinweist, ist der Benutzer des Fernmeldeendgeräts verunsichert; teilweise wird der Verbindungsaufbau von der Bedienperson abgebrochen und neu gestartet.

Ausgehend von diesem Stand der Technik liegt der Erfindung die Aufgabe zugrunde, eine Schaltungsanordnung der eingangs genannten Art anzugeben, die weitergehende Informationen erzeugt.

Diese Aufgabe wird erfindungsgemäß mit einer Schaltungsanordnung gelöst, die in den Ansprüchen definiert ist.

Die Erfindung ist mit einer Mehrzahl von Vorteilen verbunden. Der Benutzer eines Geräts mit einer erfindungsgemäßen Schaltungsanordnung wird durch dynamische, optische und/oder akustische Anzeigen umfassend über Vermittlungszustände informiert. Die durch die erfindungsgemäße Schaltungsanordnung gebildeten Anzeigen bestehen aus einer Serie von Anzeigen "bewegter Bilder". Neben der amtlichen Information dieser Anzeigen ist auch ein Unterhaltungswert für den Benutzer einer derartigen Schaltungsanordnung hervorzuheben, so daß zugleich eine größere Akzeptanz von Geräten mit der erfindungsgemäßen Schaltungsanordnung durch Benutzer erzielt wird.

Die Erfindung wird nun anhand der Zeichnungen beschrieben.

Es zeigt
Fig. 1 schematisch eine erfindungsgemäße Schaltungsanordnung; und
Fig. 2-7 Beispiele für Anzeigen, die mit der Schaltungsanordnung nach Fig. 1 gebildet werden.

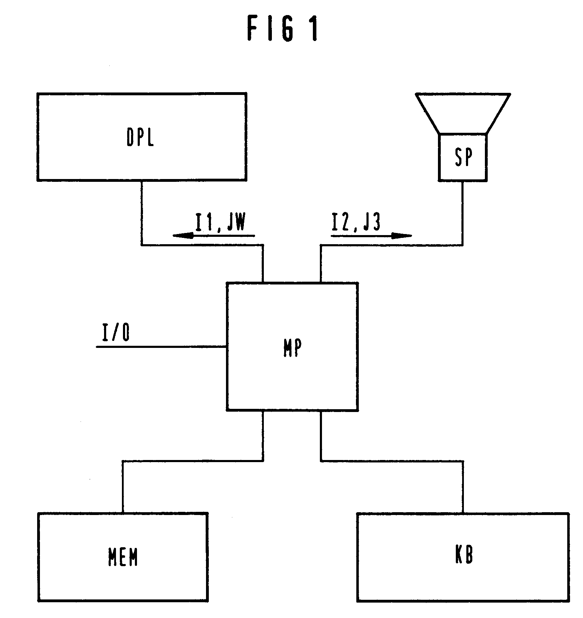

Die in Fig. 1 dargestellte Schaltungsanordnung weist ein Steuerwerk MP, eine optische Anzeigeeinrichtung DPL und gegebenenfalls eine akustische Anzeigeeinrichtung SP auf. Die beiden Anzeigeeinrichtungen DPL und SP sind mit dem Steuerwerk verbunden. Die erfindungsgemäße Schaltungsanordnung kann ferner einen Speicher MEM aufweisen, der Informationen enthält, insbesondere, sofern die erfindungsgemäße Schaltungsanordnung in einem Fernmeldegerät implementiert ist, vermittlungszustandsbezeichnende Informationen. Ferner kann die erfindungsgemäße Schaltungsanordnung eine Tastatur KB mit Tasten aufweisen. Das Steuerwerk ist ferner mit einer Leitung I/O verbunden, über welche Signale beispielsweise von einer privaten Nebenstellenanlage oder einer öffentlichen Vermittlungseinrichtung zu der erfindungsgemäßen Schaltungsanordnung übertragen werden. Ebenso werden Signale von dem Steuerwerk beispielsweise an die Zentrale einer Nebenstellenanlage oder an eine öffentliche Vermittlungseinrichtung übertragen.

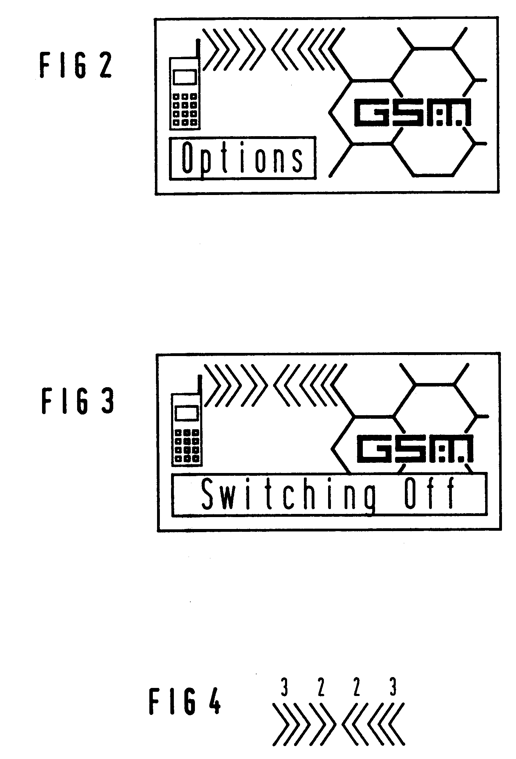

Das dem Steuerwerk MP zugeordnete Steuerungsprogramm ist in der Weise ausgestaltet, daß der optischen Anzeigeeinrichtung DPL in einem vorgebbaren, ersten Vermittlungszustand eine Mehrzahl unterschiedlicher erster Informationen I1 in zeitlicher Abfolge zuführt, wobei mindestens ein Teil der Mehrzahl dieser unterschiedlichen Informationen I1 den ersten Vermittlungszustand bezeichnen. Beispiele für erste Informationen bzw. die entsprechenden Symbole, die bei einer Ansteuerung der optischen Anzeigeeinrichtung mit den ersten Informationen angezeigt werden, sind in den Fig. 2, 3 und 4 dargestellt. Diese Informationen bzw. Signale sind beispielsweise in einer horizontalen Achse angeordnete Pfeile bzw. eine Mehrzahl von Pfeilen. Beispielsweise werden gleichzeitig zwei gegeneinanderweisende, aus jeweils drei Pfeilen bestehende Pfeilgruppen und/oder zwei gegeneinandergerichtete, aus jeweils zwei Pfeilen bestehende Pfeilgruppen angezeigt.

Das Steuerungsprogramm kann weiterhin in der Weise ausgestaltet sein, daß das Steuerwerk der optischen Anzeigeeinrichtung gleichzeitig mit der Mehrzahl unterschiedlicher erster Informationen I1 weitere Informationen IW zuführt, die die optische Anzeigeeinrichtung DPL in Form von alphanumerischen Zeichen anzeigt. In den Fig. 2, 3, 4, 5, 7 und 8 sind Beispiele alphanumerischer Zeichen dargestellt, nämlich "GSM", "Options", "Switching Off" und "Mute".

Das Steuerungsprogramm kann auch in der Weise ausgestaltet sein, daß der akustischen Anzeigeeinrichtung SP mindestens zweite Informationen zugeführt werden, die den ersten Vermittlungszustand bezeichnen. Diese zweiten Informationen lassen sich beispielsweise durch einen Dauerton oder eine Folge derselben Töne akustisch umsetzen.

Es kann auch vorgesehen sein, daß das Steuerwerk der akustischen Anzeigeeinrichtung SP eine Mehrzahl unterschiedlicher dritter Informationen in zeitlicher Abfolge zuführt, wobei mindestens ein Teil dieser unterschiedlichen dritten Informationen den ersten Vermittlungszustand bezeichnen. Diese unterschiedlichen dritten Informationen I3 werden beispielsweise in Form einer Melodie umgesetzt.

Mindestens ein Teil dieser unterschiedlichen dritten Informationen können den ersten Vermittlungszustand bezeichnen. Der erste Vermittlungszustand kann also durch eine gleichzeitige optische und akustische Anzeige dargestellt werden.

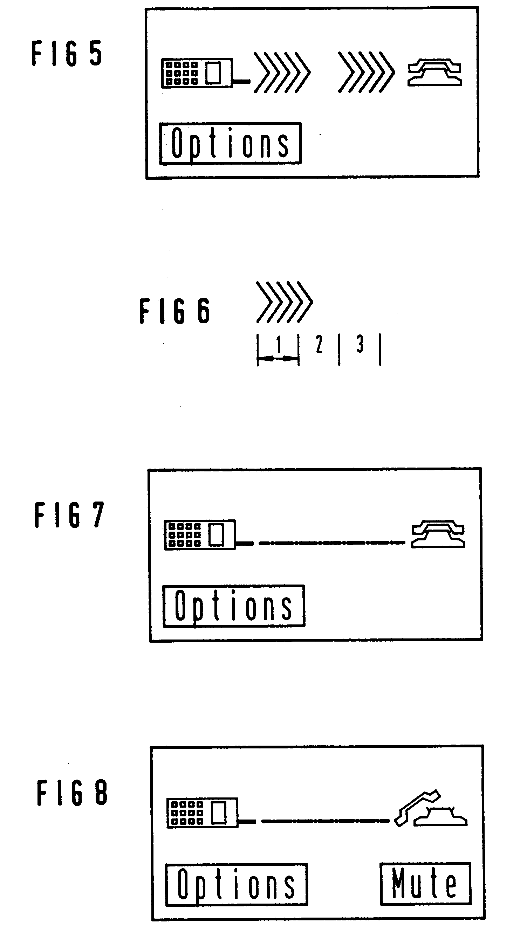

Der erste Vermittlungszustand ist beispielsweise ein Verbindungsaufbau oder ein Verbindungsabbau. Beispielsweise läßt sich ein Verbindungsaufbau mit den in Fig. 4 dargestellten graphischen Elementen in der folgenden Weise optisch darstellen:
1. Kein Signal
2. 3 3
3. 3 2 2 3
4. 2 2
5. Wiederholen der Abfolge 1-4.

Ein Verbindungsabbau läßt sich in der folgenden Weise darstellen:
1. 3 2 2 3
2. 2 2
3. 3 3
4. Kein Signal

Der Verbindungsaufbau ist bei dem in Fig. 2 dargestellten Ausführungsbeispiel und bei den oben genannten zeitlichen Abfolgen durch die Kombination "3 3"/"3 2 2 3" eindeutig gekennzeichnet, während der Verbindungsabbau bei dem in Fig. 3 dargestellten Ausführungsbeispiel und bei den oben genannten zeitlichen Abfolgen durch die Kombination "3 2 2 3"/"2 2" und "2 2"/"3 3" eindeutig gekennzeichnet ist.

Die vorstehend dargestellten Abfolgen von Symboldarstellungen lassen sich mit der optischen Anzeige in Form von alphanumerischen Zeichen kombinieren. Beispiele hierfür sind in den Fig. 2 und 3 angegeben.

In den Fig. 5, 7 und 8 sind Beispiele für Anzeigen weiterer Vermittlungszustände angegeben.

Beispielsweise läßt sich das Aussenden einer Rufnummer eines gerufenen B-Teilnehmers durch eine Anzeige nach Fig. 4 darstellen, wobei die in Fig. 5 dargestellten Symbole in der Reihenfolge 1, 2, 3, etc. verwendet werden. In die in Fig. 4 dargestellte Anzeige kann ferner die eigentliche Rufnummer des B-Teilnehmers eingefügt werden.

Der Vermittlungszustand "Verbindung mit gerufenem Teilnehmer (Freizeichen)" kann insbesondere durch die in Fig. 7 dargestellte Anzeige realisiert werden. Das Freizeichen kann ferner durch ein Blinken des graphischen Telefonsymbols dargestellt werden. Die in Fig. 7 dargestellte Anzeige kann sukzessiv aufgebaut werden, wobei beispielsweise ausgehend von dem graphischen Symbol des horizontalen mobilen Telefons jeweils ein Stück der strichgepunkteten Linie, die den Verbindungsweg repräsentiert, sukzessive in Richtung des Telefonsymbols entsprechend dem phasenweisen Fortgang des Verbindungsaufbaus angezeigt werden. Der Verbindungsaufbau und in analoger Anwendung der Verbindungsabbau können also mit verbindungsaufbauphasenindividuellen bzw. verbindungsabbauphasenindividuellen Symbolen dargestellt werden. Einzelne Phasen des Verbindungsaufbaus oder des Verbindungsabbaus werden jeweils durch eine phasenindividuelle erste und/oder dritte Information bezeichnet, wobei diese phasenindividuellen Informationen in zeitlicher Abfolge auf der optischen Anzeigeeinrichtung DPL bzw. durch die akustische Anzeigeeinrichtung SP angezeigt werden.

In Fig. 8 ist der Vermittlungszustand "Abheben des B-Telefonhandapparates" (d.h. Herstellen der Verbindung) dargestellt; dieser Vermittlungszustand ("zweiter Vermittlungszustand") schließt sich an den in Fig. 7 dargestellten Vermittlungszustand ("erster Vermittlungszustand") an. Im zweiten Vermittlungszustand werden der optischen Anzeigeeinrichtung DPL ein Teil der ersten Informationen zugeführt (z.B. zur Darstellung der Verbindungsleitung und des Telefonkörpers rechts in den Figuren 7 und 8), die der optischen Anzeigeeinrichtung bereits im ersten Vermittlungszustand zugeführt werden.

Auch die in Fig. 5, 7 und 8 dargestellten optischen Anzeigen können mit akustischen Anzeigen kombiniert werden.

Die Erfindung ist allgemein auf programmgesteuerte Geräte mit optischen und gegebenenfalls akustischen Anzeigeeinrichtungen, insbesondere auf Fernmeldegeräte und Fernmeldeendgeräte, anwendbar. Ein bevorzugtes Anwendungsbeispiel sind mobile Fernsprechendgeräte.

## Patentansprüche

1. Schaltungsanordnung zur Anzeige von vermittlungszustandsbezeichenden Informationen auf einer optischen Anzeigeeinrichtung (DPL) eines Fernmeldegeräts (T) mit einem Steuerwerk (MP), wobei ein dem Steuerwerk (MP) zugeordnetes Steuerungsprogramm in der Weise ausgestaltet ist, daß der optischen Anzeigeeinrichtung (DPL) vermittlungszustandsbezeichnende Informationen zugeführt werden, und wobei die optische Anzeigeeinrichtung (DPL) die vermittlungszustandsbezeichenden Informationen in Form von Symbolen anzeigt,
**dadurch gekennzeichnet**,
daß das Steuerwerk (MP) der optischen Anzeigeeinrichtung (DPL) in einem ersten Vermittlungszustand eine Mehrzahl unterschiedlicher erster Informationen (I1) in zeitlicher Abfolge zuführt, und daß mindestens ein Teil der Mehrzahl dieser unterschiedlichen Informationen den ersten Vermittlungszustand bezeichnen.

2. Schaltungsanordnung nach Anspruch 1,
**dadurch gekennzeichnet**,
daß das Steuerungsprogramm in der Weise ausgestaltet ist, daß das Steuerwerk (MP) der optischen Anzeigeeinrichtung (DPL) gleichzeitig mit der Mehrzahl unterschiedlicher Informationen weitere Informationen (IW) zuführt, die die optische Anzeigeeinrichtung (DPL) in Form von alphanumerischen Zeichen anzeigt.

3. Schaltungsanordnung nach einem der vorstehenden Ansprüche,
**dadurch gekennzeichnet**,
daß das Steuerungsprogramm in der Weise ausgestaltet ist, daß das Steuerwerk (MP) einer akustischen Anzeigeeinrichtung (SP) mindestens zweite Informationen (I2) zuführt, die den ersten Vermittlungszustand bezeichnen.

4. Schaltungsanordnung nach Anspruch 1 oder 2,
**dadurch gekennzeichnet**,
daß das Steuerwerk (MP) einer akustischen Anzeigeeinrichtung (SP) eine Mehrzahl unterschiedlicher dritter Informationen (I3) in zeitlicher Abfolge zu deren akustischer Anzeige zuführt, und daß mindestens ein Teil dieser unterschiedlichen dritten Informationen den ersten Vermittlungszustand bezeichnen.

5. Schaltungsanordnung nach einem der vorstehenden Ansprüche,
**dadurch gekennzeichnet**,
daß der erste Vermittlungszustand ein Verbindungsaufbau oder ein Verbindungsabbau ist.

6. Schaltungsanordnung nach Anspruch 4 oder 5,
**dadurch gekennzeichnet**,
daß einzelne Phasen des Verbindungsaufbaus oder des Verbindungsabbaus jeweils durch eine phasenindividuelle erste und/oder dritte Information bezeichnet werden, und daß phasenindividuelle erste und/oder dritte Informationen in zeitlicher Abfolge angezeigt werden.

7. Schaltungsanordnung nach Anspruch 5,
**dadurch gekennzeichnet**,
daß das Steuerungsprogramm in der Weise ausgestaltet ist, daß das Steuerwerk (MP) der optischen Anzeigeeinrichtung (DPL) in einem zweiten Vermittlungszustand, der dem ersten Vermittlungszustand unmittelbar folgt, einen Teil der ersten Informationen zuführt.

8. Schaltungsanordnung nach Anspruch 7,
**dadurch gekennzeichnet**,
daß das Steuerwerk (MP) der akustischen Anzeigeeinrichtung (SP) im zweiten Vermittlungszustand einen Teil der dritten Informationen zuführt.

9. Schaltungsanordnung nach einem der vorstehenden Ansprüche,
**dadurch gekennzeichnet**,
daß das Steuerungsprogramm in der Weise ausgestaltet ist, daß das Steuerwerk im Zusammenwirken mit der optischen Anzeigeeinrichtung (DPL) eine Anzeige nach den Fig. 2 bis 6 bildet.
